# EUROPEAN PATENT SPECIFICATION

(11) **EP 1 225 773 B1**
(45) Date of publication and mention of the grant of the patent: **06.05.2004**
(21) Application number: 01101384.4
(22) Date of filing: 22.01.2001
(51) Int. Cl.: H04Q 7/30

(54) **Tandem free Hand-over**
Verbindungsweiterreichen im TFO-Modus (tandem free operation)
Transfert intercellulaire dans un mode TFO (tandem free operation)

(43) Date of publication of application: 24.07.2002
(73) Proprietor: Telefonaktiebolaget LM Ericsson (publ), 16483 Stockholm (SE)
(72) Inventor: Hellwig, Karl, 97539 Wonfurt (DE); Ertel, Emilian, 90471 Nürnberg (DE); Junkawitsch, Jochen, 92676 Eschenbach (DE)
(74) Representative: Mohsler, Gabriele

(56) References cited:
- EP-A- 0 847 211
- DE-A- 19 804 581
- US-A- 5 850 606
- "Digital cellular telecommunications system (Phase 2+); GSM 03.53 version 7.0.1 Release 1998" July 1999 (1999-07) , EUROPEAN TELECOMMUNICATIONS STANDARDS INSTITUTE (ETSI) TS 101 732 , SOPHIA ANTIPOLIS CEDEX, FRANCE XP002154466 * the whole document *
- JERRY SKENE: "UFO? No, TFO!" COHERENT COMMUNICATIONS - ARTICLE , January 1998 (1998-01), pages 1-2, XP002085966

## Description

### FIELD OF THE INVENTION

The present invention relates to a communication system.

### DESCRIPTION OF THE PRIOR ART

In digital systems for mobile communication speech signals are encoded by a speech encoder in order to reduce the data rate for saving bandwidth. In a normal call originating in a mobile station and terminating in a mobile station, a so-called mobile to mobile call, the speech signal usually is encoded and decoded twice. This situation is explained in the following independent from the fact where a call is originating and is terminating. In the following the attribute "local" is used for all kind of net nodes, e.g. mobile station, base station, transcoder, etc. which are involved in an hand-over whereas the other nodes that are not affected by the handover are assigned the attribute "distant". In a local mobile station the speech signal is encoded a first time before the encoded signal is sent over the air to a first base station, which is named herein local base station with reference to the local mobile station. A first transcoder, because of its allocation to the local base station herein called local transcoder decodes the encode signal which it receives from the local base station into a so-called a-law/µ-law signal which is commonly used in fixed communication networks. The decoded signal is routed in the fixed network to a second base station, the distant base station that is close to the distant mobile station. Before the distant base station can transmit the signal the signal is encoded again in a second transcoder, the distant transcoder. The encoded signal is emitted by the distant base station and is decoded in the distant mobile station. The speech signal flow in the opposite direction is handled symmetrically.

As in this configuration two encoder/decoder pairs are lined up (the first speech encoder of the local mobile station and the decoder of the local transcoder is regarded as a first pair and the speech encoder of the distant transcoder and the speech decoder of the distant mobile station is regarded as a second pair) this configuration is called a speech codec "tandem". The key inconvenience of a tandem configuration is the speech quality degradation introduced by the double transcoding. This degradation is usually more noticeable when the speech codecs are operating at low transmission rates.

When the local and distant mobile stations are using the same type of speech codec, it is possible to transmit the speech frames received from the local mobile station to the distant mobile station without the need to activate the transcoding functions in the local and the distant transcoder. As then there is only one pair of encoder and decoder (that is the encoder in the local mobile station the decoder in the distant mobile station) involved this configuration is called Tandem Free Operation (TFO). In modem networks, like UTMS, it is even possible to discard the whole Transcoder Hardware. This is then called a Transcoder Free Operation (TrFO). By this TFO the compressed speech signal is transmitted over the fixed network instead e.g. the usual a-law/µ-law signal. Besides the improvement of the speech quality by avoiding double transcoding this also saves costs as the compressed signal needs less bandwidth in the fixed network and power is saved since transcoding is bypassed. All necessary methods for negotiating, establishing and maintaining a Tandem Free Operating connection (TFO connection) are standardized for Codec types without configuration parameters (e.g. in GSM 08.62 for GSM_FR, GSM_HR and GSM_EFR) or are going to be standardized for more complex codec types (e.g. the adaptive multi-code rate (AMR)) by the 3^{rd} Generation Partnership Project. There is already a Technical Specification available (3G TS 28.062 V.1.0.0; 3^{rd} Generation Partnership project; Technical Specification Group Services & Systems Aspects; In-band Tandem Free Operation (TFO) of Speech Codecs; Stage 3-Service Description; Release 2000).

### PROBLEM OF EXISTING TECHNOLOGY

When a mobile station is moving around it may leave the cell that is served by the base station the mobile station originally has been allocated. The mobile station then has to be allocated to a neighboring base station. This is commonly known as a hand over of the mobile station. In GSM systems the functionality of a base station is distributed to base station controllers (BSC) and base transceiver stations (BTS), whereby a base station controller usually is designed to control a plurality of base transceiver stations. The hand over of a mobile station from a BTS by which it originally has been served - which therefore herein is called "old BTS" - to a new BTS is initiated by the BSC of the old BTS. As commonly known the BSC collects information from each mobile terminal on parameters regarding the receive quality with respect to the current serving BTS and neighbored BTSs.

If the old and the new base station are controlled by the same BSC this kind of hand-over is called a Intra BSC hand-over. If the old BTS is controlled by another BSC than the new BTS this kind of hand-over is called an Inter BSC hand-over. The hand-over of a call is constituted by two actions: the radio connection of the local mobile station has to be switched from the old BTS to the new BTS and the connection between the distant nodes and the old BTS has to be rerouted to the new BTS. For rerouting the call between distant nodes and the BTS in case of a Intra BSC hand-over a switch inside the local BSC is used; in case of a Inter BSC handover a switch, to which the old and the new BSC are connected to has to be used.

If a local TRAU is assigned on a fixed base to a corresponding BSC an Intra BSC hand-over will not or only marginally affect an ongoing Tandem Free call. In situations where a call is routed through another new TRAU than the old TRAU that was used before the hand-over this will usually force a Tandem Free call to a fall back into a Tandem call during the hand-over as the new TRAU is not yet in TFO mode. After the hand-over the Tandem Free call will be reestablished by incorporating the new TRAU.

As switching from Tandem Free Operation to Tandem Operation goes hand in hand with noticeable signal degradation users of mobile stations may be irritated by sudden changes of speech quality.

A further problem of each hand-over is that the hand-over on the radio interface is executed earlier than the hand-over in the corresponding switch. Only when the new BTS has reliably detected that the mobile station is now transmitting to the new BTS this new BTS can send a "Hand-over Complete" message to the BSC, which then switches the connection in the corresponding switch of the local nodes and terminates the hand-over procedure. During that transition time the distant nodes receive the speech signal from the old transcoder (which is not longer receiving valid parameters), while the new transcoder has valid parameters, but is not through-connected yet. A similar consideration is true for the opposite direction. Therefore a noticeable gap occurs within the speech signals in both directions.

US-A-5 860 606 describes an insertion of a handover device into a communication path between nodes during a handover procedure, wherein the communicating nodes are informed about the insertion of the device and provide informations about parameters related to the handover to the device; the handover device has the functionality of a bridge.

However, since the handover device cannot gatter the informations by itself, implementation changes are required in the nodes and in the network.

### OBJECT OF THE INVENTION

It is therefore an object of the invention to maintain Tandem Free Operation in all different kind of hand-overs. A further object of the invention is to minimize the hand-over gap.

### SUMMARY OF THE INVENTION

By means of a TFO hand over device that is inserted into the path a short time before a hand-over and that is removed a short time after the hand-over the old and the new transcoder can be connected with the distant transcoder so that no interruption of the speech signal will occur when the hand-over is performed. In the down-link direction this can very simple be achieved by distributing the speech signals received from the distant transcoder to the old and the new transcoder as well. In the up-link direction the speech signals of the old and the new transcoder are taken alternatively. Which one has to be taken is decided by the hand-over device by means of evaluating the messages and parameters that pass the hand-over device. The flow of TFO Frames and TFO Messages is kept and therefore the Tandem Free connection is maintained during the hand-over without a noticeable speech gap.

The advantage of the hand-over device is that the hand-over device is designed to interact with the distant transcoder and the local transcoders in a way that they do not notice that something has been inserted. Therefore no update of transcoder or BTS or BSC software is required to handle the hand-over device. This is a big advantage for already installed systems, like GSM systems, as no modification of installed components is necessary. Changing a running system always bears the danger that unexpected error situations will arise. Also the BSC does not need to have any knowledge whether TFO is going on or not.

Since the hand-over device is inserted by the old BSC only if a hand-over is expected to come the fact of the insertion can be used as a trigger for the hand-over device to start its procedure. In this case it is not necessary that the old BSC sends an explicit message announcing a hand-over. This keeps the handling within the old and new BSCs and BTSs simple and unaltered.

### BRIEF DESCRIPTION OF THE INVENTION

In the following the invention will be further described according to the figures and by means of examples
- Fig.1:: is a block diagram of a communication system having arranged a hand-over device to prevent loss of tandem free operation and the speech gap during a hand-over.
- Fig. 2a: shows the path switched before the hand-over occurs
- Fig. 2b: shows the paths switched when the hand-over is initiated
- Fig. 2c: shows the path that is switched when the hand-over is completed.
- Fig. 3: is a block diagram of the hand-over device according to the present invention.
- Fig. 4: is a protocol flow diagram illustrating the flow of messages during a hand-over between the distinct system devices.

### EMBODIMENT OF THE INVENTION

The invention is applicable to all kind of hand-overs in a communication system. As the actual benefit of the invention is maintaining Tandem Free Operation when a local TRAU is changing during a hand-over this situation is elucidated by means of the typical situation for a change of the TRAUs in the following example of an Inter BSC Hand-over.

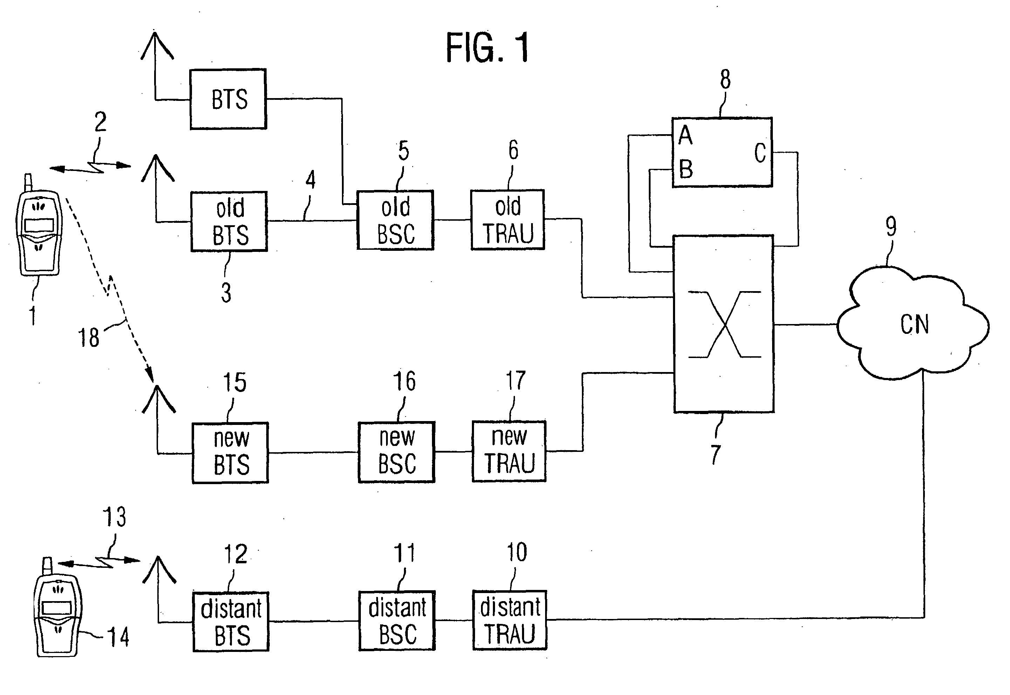

FIG. shows a block diagram of a system for mobile communication for exchanging speech signals between a first subscriber and a second subscriber. The communication system is shown in simplified form and is illustrative of a call routing mechanism between subscriber units within the communication system. Although the both subscriber units depicted in Fig. 1 are mobile terminals a subscriber unit also may be a fixed site terminal. For reasons of simplicity the communication system follows the example of the well-known GSM system. A person skilled in the art will readily appreciate that parts of the system or the system as a whole may be constituted by a system not conforming to GSM but for example a system for Wideband CDMA.

In the example depicted in Fig. 1 two mobile terminals are exchanging speech signals. As in the hand-over scenario described in the following a hand-over is assumed for the first mobile terminal 1 that terminal is called hereinafter the local mobile terminal 1. The second terminal is called hereinafter the distant mobile terminal 14. In both mobile terminals 1, 14 speech signals to be transmitted are encoded by a speech codec (not shown) to reduce the data rate of the speech signal. The local terminal 1 transmits the encoded speech signal via an up-link radio channel 2 to a base transceiver station (BTS) 3. With respect to the hand-over that will be explained in the following this base transceiver station is called hereinafter "old base transceiver station" or "old BTS" respectively. The old BTS is connected via a communication line 4, e.g. a PCM line with a base station controller (BSC) 5. With respect to the hand-over scenario this base station controller hereinafter is called "old base station controller" or "old BSC" respectively. A base station controller may control one or more than one base transceiver stations. The old BSC is coupled to a first transcoder and rate adaptation unit (TRAU) which is called hereinafter "old TRAU". Besides the ability to transcode speech encoded data into usual a-law/µ-law signals a modem TRAU, containing an Adaptive Multi Rate (AMR) Codec type, also has the ability to adapt the code rate of different speech encoder modes. Via a switch 7 the output signals of the old TRAU 6 are routed into a communication net, hereinafter called core net (CN) 9 to a distant TRAU 10. The distant TRAU 10 is connected to a distant BSC 11. The distant BSC 11 routes the speech-encoded data to a distant BTS 12, which serves the distant mobile terminal 14. The speech-encoded data is transmitted via a down-link radio channel 13 from the distant BTS 12 to the distant mobile terminal 14. In the mobile terminal 14 the speech-encoded data is decoded and output as an analogue signal. The speech input signal of the distant mobile terminal 14 is encoded in the mobile terminal 14 and routed the other way around to the local terminal 1.

For the sake of brevity, the communication system is illustrated and described with only limited amounts of infrastructure and subscriber equipment, although it will be readily appreciated that the system will comprise many subscribers, base transceiver stations, TRAUs etc. for example. E.g. in some implementations additional switches may be used to freely assign TRAUs to different communication lines etc.

The case that is interesting here is the case that the local terminal 1 and distant terminal 14 could agree to use a type of encoder they have in common, and in case they agreed on an AMR Codec type they also agreed on a common configuration or a TFO compatible configuration. In this case the old TRAU 6 and the distant TRAU 10 will be set into a transparent mode, that means that both TRAUS do not apply any transcoding. This is called Tandem Free Operation.

If the local mobile terminal 1 is moving around it will happen that it leaves the serving area of the old BTS 3 to which it is assigned and moves into the serving area of another BTS, which hereinafter is called new BTS. For the purpose of switching a call from the old BTS 3 to the new BTS 15, which is commonly known as a handover, the new BTS is connected via a new BSC 16 and a new TRAU 17 to the switch 7.

The device for maintaining a Tandem Free operation all the time, and especially during the time of an hand-over according to the invention is called TFO hand-over support device or for sake of brevity just hand-over device 8. Preferably the handover device is connected to the switch 7 to which the old and the new TRAU 17 are connected. Of course the hand-over device 8 may be incorporated as an integral function of the switch 7 or - as an external component - it may be linked in by a dedicated switch of its own, or it may be part of a pool of TRAUs.

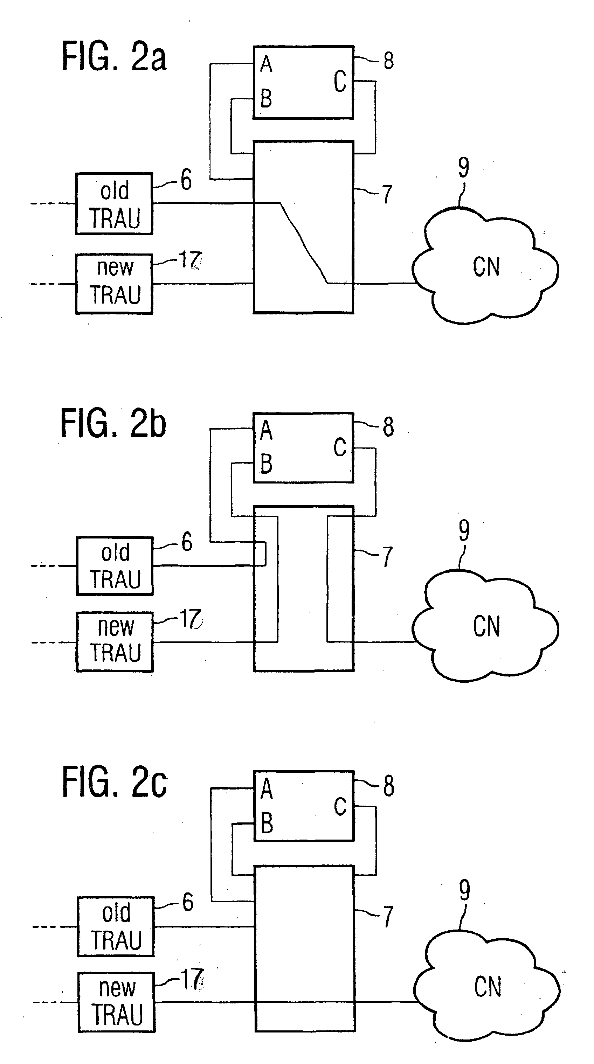

Turning now to Fig. 2 different switching states of the switch 7 and the insertion and removal of the hand-over device 8 is shown for different phases of a hand-over. As long as no hand-over is necessary the old TRAU 6 is directly connected by switch 7 to the CN 9 (Fig. 2a). If a hand-over is excepted the hand-over device 8 will be inserted in the communication path of the old TRAU 6, the new TRAU 17 and the path to the distant subscriber (Fig. 2b). The hand-over device according to the invention provides two terminals A, B for connecting the TRAUs of the local side, that is the old TRAU 6 and the new TRAU 17. A third terminal C is provided to connect the hand-over device 8 to the distant TRAU. After the hand-over is completed the hand-over device 8 is removed thus that the switch 7 connects only the new TRAU 17 to the CN 9(Fig. 2c). Due to the transparency of the hand-over device 8 it might be connected all the time without harm. But it is a matter of costs. As the hand-over device is necessary only for a limited time, e.g. one second, its functionality can be used for hand-overs of other subscribers in a time multiplex manner. E.g. if a hand-over will occur in average every ten seconds and the handover duration is in average one second then a hand-over device 8 can handle up to ten hand-overs in average. Therefore the number of hand-over devices 8 supplied at a switch 7 can be chosen to correspond to ten per cent of the subscribers capacity of that switch 7. The example values are for illustration only and may differ in practice.

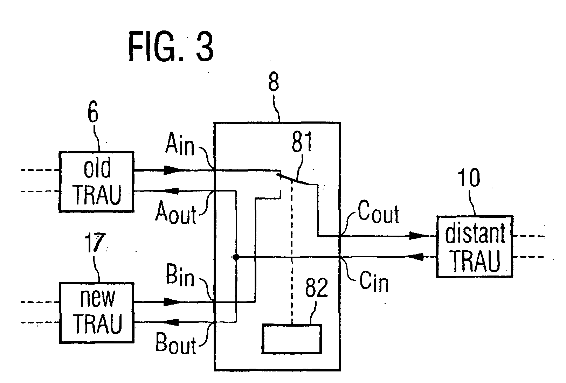

Fig. 3 illustrates the basic construction principle of the hand-over device 8. The hand-over device 8 provides the first and a second terminal A, B for connecting the old and the new TRAUs 6,17. The third terminal is provided for connecting, e.g. via a CN etc. the distant TRAU. For a better understanding of the principle of the handover device 8 the old TRAU 6, the new TRAU 17 and the distant TRAU 10 are shown as to be directly connected to the hand-over device 8 without showing the switch 7 and the CN 9 which are connected in-between. Up to now the bidirectional communication paths had been depicted as single lines as the direction of the communication was without any meaning. For the hand-over device 8 the direction of the communication is crucial. Therefore now it will be differentiated between the encoded speech signals coming from the local terminal 1 and going to the distant terminal 14 (called hereinafter up-link speech signals as these signals are send by the local terminal in up-link direction to its BTS) and the encoded speech signals coming from the distant terminal 14 and going to the local terminal 1 (adequately called hereinafter down-link speech signals). The down-link speech signals arriving at the down-link input terminal Cᵢₙ of the hand-over device 8 are just distributed to both down-link output terminals Aₒᵤₜ, Bₒᵤₜ of the hand-over devices 8. The up-link speech signals arriving at the up-link input terminals Aᵢₙ and Bᵢₙ of the hand-over device are connected to an internal switch 81 of the hand-over device 8. The output of that internal switch 81 is connected to the up-link output terminal Cₒᵤₜ of the hand-over device 8.

A control unit 82 of the hand-over device 8 controls the internal switch 81. To decide the switching state of the internal switch 81 the control unit 82 evaluates the in-band messages of all input signals. As the speech signals are potentially delayed and some of the in-band messages are newly generated, modified or terminated in certain cases by the hand-over device 8 also every signal before it is output to the output terminals Aₒᵤₜ. Bₒᵤₜ Cₒᵤₜ has to be looped through the control unit 82. For reasons of clarity theses lines are not shown in the block diagram of Fig. 3. The hand-over device 8 for example could be implemented by means of digital signal processor or by specific ASIC devices.

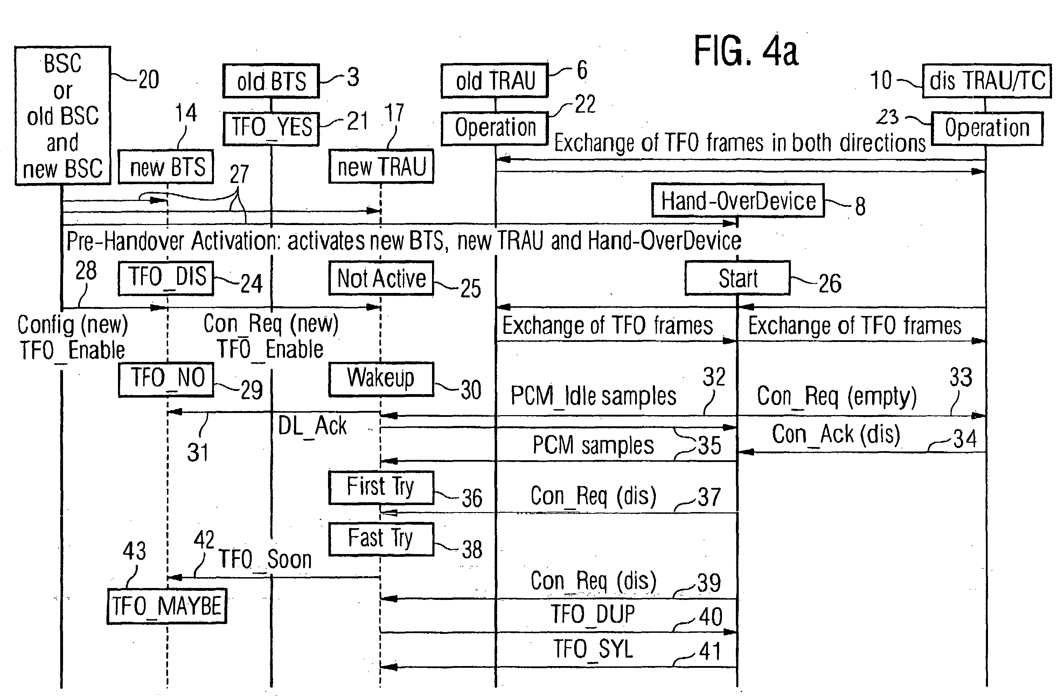

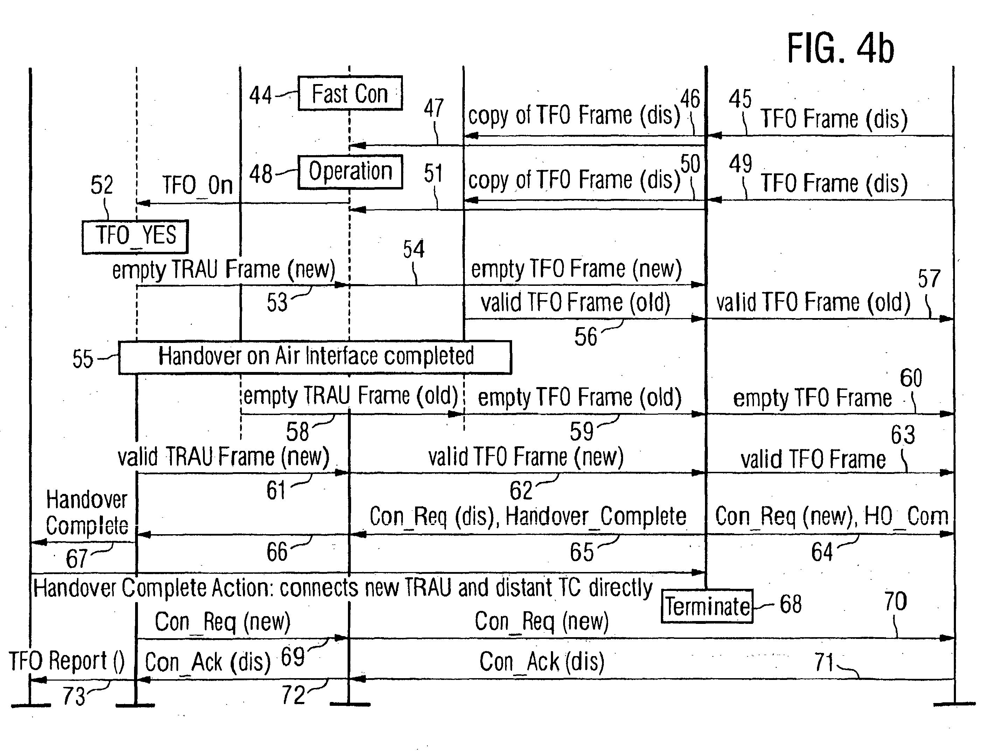

The message flow during a hand-over and the role of the hand-over device 8 will now be understood best by means of a protocol flow diagram depicted in Fig. 4. As from the point of view of the hand-over device 8 there is no difference between an Inter BSC hand-over or an Intra BSC hand-over the nodes of a BSC (in case of a Intra BSC hand-over) and the nodes of an old BSC and a new BSC (in case of a Inter BSC hand-over) have been merged into a single node 20 in Fig. 4

The individual network nodes will be set by received messages into certain states. These states are also depicted in Figure 4. In a certain state certain messages will cause certain reactions, e.g. setting the device in another state and/or causing the device to send a certain message or to wait for a certain message. As a starting point it is assumed Tandem Free operation is ongoing between old BTS 3, old TRAU 6, distant TRAU 17 and distant BTS (not shown in Fig. 4 as the messages sent and received from distant BTS are not object of this invention. For the other nodes the same numerals as in the preceding figures have been used). That means that old TRAU 6 and distant TRAU 10 are in the state of "Operation"22, 23 and are exchanging TFO frames in both directions. The old BTS 3 is due to the ongoing TFO-Operation in the state "TFO_YES" 21. The new BTS 14, as it has not yet been activated for a hand-over is in the state "TFO_Disabled" 24 . The same applies to the new TRAU 17, which is in State "Not Active" 25. Further it is assumed that new BTS and new TRAU 17 are initialized with the configuration parameters and synchronized and working before the hand-over takes place.

The hand-over device is inserted when the hand-over need became obvious and the new BTS 14 and new TRAU are allocated. When the BSC 20 wants to initiate a hand-over it may send an optional "Pre-hand-over notification"-message 27 to the old BTS 3. As in this embodiment no use is made of the "Pre-hand-over notification"-message 27 it is not necessary that the hand-over device is already inserted by the switch 7 as there is no reaction of the hand-over device 8 to this message planned. When the hand-over device is inserted by the switch 7 it can detect this state by analyzing the TFO-frames it is receiving from the distant TRAU 10 and the old TRAU 6 respectively. The hand-over device 8 sets itself in a state "Start" 26. In this state - as long as not explicitly stated otherwise - it forwards all TFO-frames that it receives from the distant TRAU 10 to the old TRAU 6 and forwards all TFO-frames received from the old TRAU 6 to the distant TRAU 10. All received TFO-frames are analysed to extract embedded messages. As it will be describe in detail now as a reaction of specific messages new messages will be created and embedded before forwarding TFO-frames. As already mentioned the reactions of the hand-over device preferably are thus that the other nodes will not see any difference whether a hand-over device is inserted or not.
The insertion of the hand-over device 8 causes a slight distortion of the TFO Frame exchange between the old TRAU 6 and the distant TRAU 17, because the signal delay through the hand-over device 8 is not perfectly zero (it is in the order of some 1..3 *125µs intervals or PCM samples) and because the switching itself causes some small errors within the TFO parameters. Both TRAUs 6, 17 will detect this errors due to the provided error detection mechanisms and will resynchronise quickly. As the available "Error Concealment" will bridge over this small distortion it will cause no noticeable effect.
As an option the hand-over device also may be constructed thus that in the handover device 8 an additional signal delay of two TFO Frames (320 * 125µs intervals or PCM samples) minus the hand-over device 8 delay (so about 40ms) is achieved. By this only two TFO Frame are lost in both directions, but synchronisation remains intact. This is possible, because the TFO Frame repeat is exactly every 20ms and the Rate Control Information (CMR) and Codec Mode Indication (CMI) every 40ms.

Next the BSC 20 sends a "Configuration_Request (new)"-message to the new TRAU and to the new BTS 14. By this "Configuration_Request"-message the new TRAU 17 is set from state "Not Active" 25 to state "Wakeup" 30. In the state "Wakeup" 30 the new TRAU 17 sends a "DL_Acknowledge"-message 31 to the new BTS 14". By this the new BTS 14 is set from state "TFO_NO" 29 to state "TFO_MAYBE". In this state the new BTS 14 and the new TRAU 17 will synchronize and prepare for work, before the hand-over takes place.

The hand-over device 8 starts its actions with sending "PCM_Idle"-patterns 32 towards the new TRAU 17. This keeps the new TRAU 17 in state "Wakeup" 30 and helps to speed up exchange of "TFO_DUP"-message 40 later. At the same time the hand-over device 8 is sending a "Configuration_Request (empty)" 33 without configuration parameters towards the distant TRAU 10, which reacts in sending a "Configuration_Acknowledge (distant)" 34 back, including the distant configuration parameters. By that the hand-over device 8 knows already the configuration of one side of the TFO connection. It can start to perform rate control towards the old TRAU 6 and the distant TRAU 10 in order to bring the codec modes in both directions into a robust mode.

In an optimal implementation this "Configuration_Request (empty)" is sent exactly within that time where the first two TFO Frames are lost anyway and by that no additional speech frame is lost. Otherwise a speech frame has to be stolen or the configuration parameters have to be inserted into a normal TFO.

Then the hand-over device 8 is terminating the PCM_Idle pattern towards the new TRAU, but sends some 100..150 PCM samples with low amplitude 35. This brings the new TRAU 17 into state "First Try" 36. Then the hand-over device 8 starts sending sequences of three TFO Frames, composed of two "Configuration_Request (distant)" 39, 160 PCM samples with low amplitude and one "TFO_Synchronization_Lost"-message 41 embedded, towards the new TRAU 17. By the "TFO_Synchronization_Lost"-message 41 the hand-over device 8 simulates the situation that thedistant TRAU receives corrupted TFO Frames coming from the old TRAU and after that no further TFO Frame, because the new TRAU is not sending TFO Frames. The typical situation in which the distant TRAU will enter a state called "Sync Lost" In this state the distant TRAU usually will stop sending TFO Frames. By receiving these messages the new TRAU 17 evaluates this sequence of events as the usual response of a distant TRAU to a hand-over.

In an optimal implementation this sending of "Configuration_Request (distant)" 39 and all following TFO Frames and TFO Messages is exactly with the correct timing like the new TRAU 17 will see the TFO Frames and TFO Messages from the distant TRAU 10 after the removal of the hand-over device 8. The new TRAU 17 can therefore synchronise already now and also the new BTS 14 can prepare before the hand-over takes place. Due to the inserted delay of about 40ms the hand-over device 8 has enough time to prepare that timing after the reception of the Configuration_Acknowledge (distant) 34.

The new TRAU 17 can interpret this distant configuration already in the state "First Try" 36 and decide whether TFO is possible or not. In this example we assume that the continuation of TFO is possible, therefor the new TRAU 17 enters state "Fast Try" 38 and starts sending "TFO_DUP"-message 40 towards the hand-over device 8 and "TFO_Soon"-message 42 towards the new BTS 14. By the "TFO-Soon"-message 42 the new BTS is set into state "TFO_MAYBE" 43. The new TRAU 17 also performs rate control towards the new BTS 14 so that all speech parameters in up-link will fit from the start with the distant side. This rate control is not shown in Fig. 4 in order to provide a better clarity and to concentrate on the TFO handling. Then the new TRAU waits for further re-started TFO Frames from the distant TRAU. The transition from "First Try" into "Fast Try" started the transmission of "TFO_DUP" messages by the new TRAU. The TFO_DUP in turn triggers the distant TRAU to re-start sending of TFO Frames.

When the "TFO_DUP"-message 40 was received by the hand-over device 8 it knows that the new TRAU 17 has understood the "Configuration_Request (distant)"-message 39 and is waiting in a state "Fast Connect" 44. The hand-over device 8 makes copies of the TFO-frames 45 it receives from the distant TRAU 10 and sends these copied TFO-frames 46 not only to the old TRAU 6 (as it has done all the time) but as TFO-frames 47 now also to the new TRAU 17. This new TRAU 17 will therefore enter state "Operation" 48 and sends a "TFO_On"-message 49 to the new BTS 14. As reaction of the reception of a "TFO_ON"-message 49 the new BTS 14 is set into state "TFO_YES" 50. Most likely this is long before the handover on the air interface takes place.

The hand-over device 8 still sends copies 46, 47 of the distant TFO Frames 45 to both local TRAUs 6,17 and receives TFO Frames from both TRAUs. Typically until that point in time the TFO Frames 55 from the old TRAU 6 will be marked with "Speech_Good" and the TFO Frames 53 from the new TRAU 17 with "Speech_Bad", because still the old BTS 3 is receiving the parameters from the mobile station 1 and the new BTS 14 is receiving nothing useful. Some when later the situation will change when the hand-over on the air interface has been executed 55: for a short while none of the local TRAUs 6, 17 will send "Speech_Good" and then the new TRAU 17 will start to send "Speech_Good", while the old TRAU 6 is continuously sending "Speech_Bad". This is the sign for the hand-over device 8 that the hand-over has been performed by the local BTS 3, 14. The hand-over device 8 selects as far as possible the TFO Frames with "Speech_Good" and send these forward to the distant TRAU 10 with the timing as the old TRAU 6 provided and which is comfortable to the distant TRAU 10.
When it became sufficiently confident that the hand-over was successfully executed the hand-over device 8 will perform a Time and Phase alignment toward the distant TRAU 10: it stops sending TFO Frames towards the distant TRAU 10 for 1..2 TFO Frames, it inserts within the LSBs of the bit stream the necessary number of "1" bits and then it start to send the TFO Frames from the new TRAU 17 in the correct phase and timing towards the distant TRAU 10, exactly as it will be later, when the hand-over device 8 is removed from the path. By that the distant TRAU 10 can synchronise to the new TFO Frame timing without loss of synchronisation. The 1..2 not sent TFO Frames are concealed by the error concealment and are not specifically noticeable to the mobile users.
The last action of the hand-over device 8 is to send a "Configuration_Request (distant)"-message with parameter "Hand-overHand-over_Complete" towards the new TRAU 17 and a "Configuration_Request (new)" with parameter "HandoverHand-over_Complete" to the distant TRAU 10. These messages trigger the delay measurement on both sides again.

Meanwhile the new BTS 14 should be sufficiently confident as well that the handover was successful and should have sent the "Hand-over Complete"-message 67 to its local BSC 20. The local BSC 20 then terminates the hand-over procedure and removes the hand-over device 8 from the path and connects new TRAU 17 and distant TRAU 10 via the switch 7 directly.
The preceding example explained the application of the invention in an Inter BSC Hand-over. A person skilled in the art will easily appreciate that apart from the fact that old BSC and new BSC are identical mostly the same message flow occurs in an Intra BSC Hand-over with changing TRAUs. As the hand-over device let pass messages in a transparent form or uses only messages modified in a form that is in conformity with standardized messages the insertion of the hand-over device according to the invention could not be detected by the TRAUs or other nodes. Therefore also in an Intra Hand-over with changing TRAUs the hand-over device will show the same benefits. Furthermore it has to be mentioned again that the invention is not restricted to the specific embodiments and examples described in the present invention. That is, on the basis of the teaching contained in the description, various modifications and variations of the invention may be carried out, e.g. the use of the invention in another system for mobile communication, e.g. the coming Wideband CDMA system. Although the TRAUS are shown located between the BSC and the switch 7, the present invention is not limited to this structure and therefore contemplates the positioning of the TRAUS and the handover device in other locations within the illustrated infrastructure.

## Claims

1. Method for a handover in a system for mobile communication switching a user (1) from an old local base station entity (3,5) with an old local transcoder (6) communicating with a distant transcoder (10) in a tandem free operation modus to a new local base station entity (15,16) with a new local transcoder (17),
**characterized in that**
during the handover the tandem free operation modus between the distant transcoder and the old local transcoder is maintained and setup to the new local transcoder and said method comprising the steps of:
- evaluating an expected handover by means of analyzing received data, and
- inserting a hand-over device (8) into the communication path before the handover, and
- evaluating the ongoing communication with respect to configuration parameters, and
- handling a communication between the new local transcoder (17) and the distant transcoder (10) and between the distant transcoder (10) and the old local transcoder (6) by means of generating messages in reaction on received messages or by means of modifying received messages before sending them out so that said handover device (8) remains unrecognisable for the base stations entities and the transcoders being involved in the communication path, and
- removing the hand-over device (8) from the communication path after the handover.

2. Hand-over device (8) adapted to support a handover in a system for mobile communication switching a user (1) from an old local base station entity (3,5) with an old local transcoder (6) communicating with a distant transcoder (10) in a tandem free operation modus to a new local base station entity (15,16) with a new local transcoder (17),
**characterized in that**
by inserting said hand-over device (8) into the communication path during the handover the tandem free operation modus is maintained between the distant transcoder (10) and the old local transcoder (6) and is setup to the new local transcoder (17),
wherein the handover device (8) has
- means for evaluating an expected handover by means of analyzing messages, and
- means for evaluating the ongoing connection in respect to configuration parameter, and
- means for handling a communication between the old local transcoder (6) and the distant transcoder (10) and between the distant transcoder (10) and the new local transcoder (17) by means of generating messages in reaction on received messages or by means of modifying received messages before sending them out so that said handover device (8) remains unrecognisable for the base stations entities and the transcoders being involved in the communication path until the handover is performed.

3. Handover-device according to claim 2 **characterised in that** the generated messages or the modified messages are sent at times where anyway speech frames would be lost due to the handover.

4. Handover-device according to claim 2 or 3 **characterised in that** one of the generated message is a Configuration_Request message containing an empty parameter set, which is used to trigger the distant transcoder to send its own configuration parameters.

5. Handover-device according to claim 2, 3 or 4 **characterised in that** speech frame classification, Speech_Good, Speech_Bad, is used to derive a decision about performed handover.

6. Handover-device according to one of the claims 2 to 5 **characterised in that** a sequence of PCM_Idle samples followed by low-amplitude PCM_Nonidle samples followed by at least one Configuration_Request is sent to the new local TRAU (17), which is adapted to interpret these messages as a usual response of distant transcoder (10) to handover, before the real handover takes place on the radio interface.

7. Handover-device according to one of the claims 2 to 6 **characterized in that** said handover device is adapted to filter data coming from the new local transcoder (17) in order to prevent them to reach the distant transcoder (10) before the handover is completed.

8. Hand-over device according to one of the claims 2 to 7 **characterized in that** said hand-over device is adapted to insert the exact number of T-Bits into the TFO Frame stream towards the distant transcoder (10) between the TFO Frames coming from the old local transcoder (6) and having the timing of the old local transcoder and the TFO Frames coming from the new local transcoder (17) and having the framing of the new local transcoder in order to achieve a seamless handover without any loss of TFO Frame synchronisation in the distant transcoder (10).

## Patentansprüche

1. Verfahren für ein Handover in einem mobilen Kommunikationssystem zum Schalten eines Benutzers (1) von einer lokalen ersten Basisstationseinheit (3, 5) mit einem lokalen ersten Transkoder (6), der mit einem entfernten Transkoder (10) in einem tandemlosen Operationsmodus kommuniziert, an eine lokale zweite Basisstationseinheit (15, 16) mit einem lokalen zweiten Transkoder (17),
**dadurch gekennzeichnet, daß**
während des Handovers der tandemlose Operationsmodus zwischen dem entfernten Transkoder und dem lokalen ersten Transkoder beibehalten und in bezug auf den lokalen zweiten Transkoder aufgebaut wird, umfassend die folgenden Schritte:
- Bewerten eines erwarteten Handovers mittels analysierender Empfangsdaten, und
- Einsetzen einer Handover-vorrichtung (8) in den Kommunikationspfad vor der Ausführung des Handover, und
- Bewerten der andauernden Kommunikation in bezug auf Konfigurationsparameter, und
- Abwickeln einer Kommunikation zwischen dem lokalen zweiten Transkoder (17) und dem entfernten Transkoder (10) sowie zwischen dem entfernten Transkoder (10) und dem lokalen ersten Transkoder (16) durch das Erzeugen von Nachrichten als Reaktion auf empfangene Nachrichten oder durch Modifizieren empfangener Nachrichten vor deren Absendung, so daß die Handover-vorrichtung (8) für die Basisstationseinheiten und die im Kommunikationspfad involvierten Transkoder unerkannt bleibt, und
- Entfernen der Handover-vorrichtung (8) aus dem Kommunikationspfad nach der Ausführung des Handovers.

2. Handover-vorrichtung (8) zum Unterstützen eines Handovers in einem mobilen Kommunikationssystem zum Schalten eines Benutzers (1) von einer lokalen ersten Basisstationseinheit (3, 5) mit einem lokalen ersten Transkoder (6), der mit einem entfernten Transkoder (10) in einem tandemlosen Operationsmodus kommuniziert, an eine lokale zweite Basisstationseinheit (15, 16) mit einem fokalen zweiten Transkoder (17),
**dadurch gekennzeichnet, daß**
durch Einsetzen der Handover-vorrichtung (8) in den Kommunikationspfad während des Handover der tandemlose Operationsmodus zwischen dem entfernten Transkoder (10) und dem lokalen ersten Transkoder (16) beibehalten und in bezug auf den lokalen zweiten Transkoder (17) aufgebaut wird, wobei die Handover-vorrichtung (8) folgendes umfaßt:
- Mittel zum Bewerten eines erwarteten Handovers mittels Analysierens von Nachrichten, und
- Mittel zum Bewerten der andauernden Kommunikation in bezug auf Konfigurationsparameter, und
- Mittel zum Abwickeln einer Kommunikation zwischen dem lokalen ersten Transkoder (16) und dem entfernten Transkoder (10) sowie zwischen dem entfernten Transkoder (10) und dem lokalen zweiten Transkoder (17) durch das Erzeugen von Nachrichten als Reaktion auf empfangene Nachrichten oder durch Modifizieren empfangener Nachrichten vor deren Absendung, so daß die Handover-vorrichtung (8) für die Basisstationseinheiten und die im Kommunikationspfad involvierten Transkoder unerkannt bleibt, bis das Handover ausgeführt ist.

3. Handover-vorrichtung nach Anspruch 2, **dadurch gekennzeichnet, daß** die erzeugten Nachrichten oder die modifizierten Nachrichten zu Zeitpunkten versendet werden, zu denen Sprachrahmen aufgrund des Handovers ohnehin verloren gehen würden.

4. Handover-vorrichtung nach Anspruch 2 oder 3, **dadurch gekennzeichnet, daß** eine der erzeugten Nachrichten eine Konfigurations_Anforderungs-Nachricht mit einer leeren Parametersatz ist, der zum Aktivieren des entfernten Transkoders verwendet wird, damit dieser seine eigenen Konfigurationsparameter sendet.

5. Handover-vorrichtung nach Anspruch 2, 3 oder 4, **dadurch gekennzeichnet, daß** eine Sprachrahmenklassifikation, Speech_Good, Speech_Bad verwendet wird, um eine Entscheidung über ein ausgeführtes Handover herzuleiten.

6. Handover-vorrichtung nach einem der Ansprüche 2 bis 5, **dadurch gekennzeichnet, daß** eine Sequenz von PCM_Idle-Abtastwerten, gefolgt von PCM_Nonidle-Abtastwerten niedriger Amplitude, gefolgt von mindestens einer Konfigurations_Anforderung an die lokale zweite TRAU (17) gesendet wird, welche so angepasst ist, daß sie diese Nachrichten als eine normale Antwort des entfernten Transkoders (10) auf ein Handover interpretiert, bevor das eigentliche Handover auf der Funkschnittstelle stattfindet.

7. Handover-vorrichtung nach einem der Ansprüche 2 bis 6, **dadurch gekennzeichnet, daß** die Handover-vorrichtung so angepasst ist, daß sie von dem lokalen zweiten Transkoder (17) kommende Daten filtert, um sie am Erreichen des entfernten Transkoders (10) zu hindern, bevor das Handover abgeschlossen ist.

8. Handover-vorrichtung einem der Ansprüche 2 bis 7, **dadurch gekennzeichnet, daß** die Handover-vorrichtung so angepasst ist, daß es die exakte Anzahl von T-Bits in den TFO-Rahmen -Datenfluss zu dem entfernten Transkoder (10) zwischen den TFO-Rahmen, die von dem lokalen ersten Transkoder (16) kommen und den Takt des lokalen ersten Transkoders aufweisen, und den TFO-Rahmen, die von dem lokalen zweiten Transkoder (17) kommen und die Rahmung des lokalen zweiten Transkoders aufweisen, einsetzt, um ein übergangsloses Handover ohne Verlust der TFO-Rahmen-Synchronisation im entfernten Transkoder (10) zu erhalten.

## Revendications

1. Méthode pour un changement de poste dans un système de communications mobiles commutant un utilisateur (1) d'une ancienne entité de station de base locale (3, 5) avec un ancien transcodeur local (6) communiquant avec un transcodeur éloigné (10) dans un mode de fonctionnement libre tandem vers une nouvelle entité de station de base locale (15, 16) avec un nouveau transcodeur local (17), **caractérisée en ce que** durant le changement de poste, le mode de fonctionnement libre tandem entre le transcodeur éloigné et l'ancien transcodeur local est maintenu et établi vers le nouveau transcodeur local, ladite méthode comprenant les étapes consistant à :
- évaluer un changement de poste attendu au moyen de l'analyse des données reçues, et
- insérer un dispositif de changement de poste (8) dans le trajet de communication avant le changement de poste, et
- évaluer la communication entrante par rapport aux paramètres de communication, et
- traiter une communication entre le nouveau transcodeur local (17) et le transcodeur éloigné (10) et entre le transcodeur éloigné (10) et l'ancien transcodeur local (16) en générant des messages en réaction aux messages reçus ou en modifiant des messages reçus avant de les envoyer de sorte que le dispositif de changement de poste (8) reste non-identifiable pour les entités de station de base et les transcodeurs impliqués dans le trajet de communication, et
- enlever le dispositif de changement de poste (8) du trajet de communication après le changement de poste.

2. Dispositif de changement de poste (8) adapté à supporter un changement de poste dans un système de communications mobiles commutant un utilisateur (1) d'une ancienne entité de station de base locale (3, 5) à un ancien transcodeur local (6) communiquant avec un transcodeur éloigné (10) dans un mode de fonctionnement libre tandem vers une nouvelle entité de station de base locale (15, 16) avec un nouveau transcodeur local (17), **caractérisé en ce qu'**en insérant le dispositif de changement de poste (8) dans le trajet de communication, le mode de fonctionnement libre tandem est maintenu entre le transcodeur éloigné (10) et l'ancien transcodeur local (6) et est établi vers le nouveau transcodeur local (18), dans lequel le dispositif de changement de poste (8) comprend
- des moyens d'évaluation d'un changement de poste attendu en analysant des messages, et
- des moyens pour évaluer la connexion entrante par rapport au paramètre de configuration, et
- des moyens pour traiter une communication entre l'ancien transcodeur local (6) et le transcodeur éloigné (10) et entre le transcodeur éloigné (10) et le nouveau transcodeur local (17) en générant des messages en réaction à des messages reçus ou en modifiant des messages reçus avant de les envoyer de telle manière que le dispositif de changement de poste (8) reste non-identifiable pour les entités de stations de base et les transcodeurs impliqués dans le trajet de communication jusqu'à ce que le changement de poste soit accompli.

3. Dispositif de changement de poste selon la revendication 2, **caractérisé en ce que** les messages générés ou les messages modifiés sont envoyés à des heures où des séquences vocales seraient perdus en raison du changement de poste.

4. Dispositif de changement de poste selon la revendication 2 ou 3, **caractérisé en ce que** le message généré est un message Configuration_Request contenant un ensemble de paramètres vides, qui est utilisé pour activer le transcodeur éloigné de manière à ce qu'il envoie ses propres paramètres de configuration.

5. Dispositif de changement de poste selon la revendication 2, 3 ou 4, **caractérisé en ce que** la classification de séquences vocales, Speech_Good, Speech_Bad, est utilisée pour dériver une décision sur le changement de poste accompli.

6. Dispositif de changement de poste selon l'une des revendications 2 à 5, **caractérisé en ce qu'**une séquence d'échantillons PCM_Idle suivie d'échantillons PCM_Nonidle de basse amplitude suivie d'au moins une Configuration_Request est envoyée au nouveau TRAU local (17) qui est adapté de manière à interpréter ces messages comme une réponse usuelle du transcodeur éloigné (10) vers le changement de poste, avant que le changement de poste réel n'intervienne sur l'interface radio.

7. Dispositif de changement de poste selon l'une des revendications 2 à 6, **caractérisé en ce que** le dispositif de changement de poste est adapté de manière à filtrer des données en provenance du nouveau transcodeur local (17) de manière à les empêcher d'atteindre le transcodeur éloigné (10) avant que le changement de poste soit terminé.

8. Dispositif de changement de poste selon l'une des revendications 2 à 7, **caractérisé en ce que** le dispositif de changement de poste est adapté pour insérer le nombre exact de T-Bits dans le flux de TFO Frames à destination du transcodeur éloigné (10) entre les TFO Frames en provenance de l'ancien transcodeur local (6) et ayant la synchronisation de l'ancien transcodeur local et les TFO Frames en provenance du nouveau transcodeur local (17) et ayant l'encadrement du nouveau transcodeur local de manière à obtenir un changement de poste transparent sans aucune perte de la synchronisation du TFO Frame dans le transcodeur éloigné.
